## Europäisches Patentamt
## European Patent Office
## Office européen des brevets

(19)

(11) Veröffentlichungsnummer : **0 033 056**
**B1**

(12) **EUROPÄISCHE PATENTSCHRIFT**

(45) Veröffentlichungstag der Patentschrift : 07.12.83

(21) Anmeldenummer : 80730080.1

(22) Anmeldetag : 19.12.80

(51) Int. Cl.³ : **G 05 B 11/01**, G 05 B 15/02

(54) **Elektronisches Regelgerät.**

(30) Priorität : 23.01.80 DE 3002745

(43) Veröffentlichungstag der Anmeldung : 05.08.81 Patentblatt 81/31

(45) Bekanntmachung des Hinweises auf die Patenterteilung : 07.12.83 Patentblatt 83/49

(84) Benannte Vertragsstaaten :
AT BE CH FR GB IT LI NL SE

(73) Patentinhaber : **SIEMENS AKTIENGESELLSCHAFT**
**Berlin und München Wittelsbacherplatz 2**
**D-8000 München 2 (DE)**

(72) Erfinder : **Lesche, Wolfgang, Dipl.-Ing.**
**Lauenburger Strasse 19**
**D-1000 Berlin 41 (DE)**

(56) Entgegenhaltungen :
ADVANCES IN INSTRUMENTATION, Band 29, Nr. 4, 1974, Selten 802-1 - 802-7 Pittsburgh, U.S.A. R. GERALD HUNDLEY: "Keyboard entry and digital display 3 mode process controller"
REGELUNGSTECHNISCHE PRAXIS, Band 20, Nr. 10, Oktober 1978, Selten 289-293 München, DE. S. BERGMANN et al.: "Ein universeller digitaler Regeler mit Mikrorechner"
REGELUNGSTECHNISCHE PRAXIS, Band 21, Nr. 7, Juli 1979, Selten 198-201 München, DE. K.F. FRÜH: "Auf Einzelreglern basierend: Das Prozessautomatisierungssystem von Kent"
MEASUREMENT AND CONTROL, Band 9, Nr. 9, September 1976, Selten 315-320 London, G.B. K.R.R. BOWDEN: "A new approach to digital process control"
INSTRUMENTS & CONTROL SYSTEMS, Band 50, Nr. 11, November 1977, Selten 43-46 Radnor, U.S.A. M.J. BEARD: "Analog controllers develop new wrinkles"
REGELUNGSTECHNISCHE PRAXIS, Band 20, Nr. 2, Februar 1978, Selten 40-47 München, DE. G. KLEBERT: "INTERKAMA '77: Analoge elektrische Regelsysteme für verfahrenstechnische Anlagen"

Elektronisches Regelgerät

Die Erfindung bezieht sich auf ein elektronisches Regelgerät mit Bedienungselementen und mit einer Anzeigevorrichtung in seiner Frontplatte mit Einrichtungen zur Einstellung der Regelparameter, wobei den Einrichtungen ein in der Frontplatte liegender Adressierschalter zur Einstellung der Regelparameter zugeordnet ist, sowie mit einer Blende, die lösbar am elektronischen Regelgerät vor der Frontplatte gehalten ist.

Bei einem bekannten Regelgerät dieser Art (Beschreibung des Gerätes « 560 Process Controller » der Barber Colman Comp., USA, vom September 1979) kann die Zuordnung der Einrichtungen zur Einstellung der Regelparameter durch Betätigen der Taste (Setup) im Bereich des einen Teils der Anzeigevorrichtung erreicht werden. Eine anschließende Veränderung des Wertes des gewählten Regelparameters geschieht durch Betätigung der Bedienungselemente, die in einer mittels der Taste aufgerufenen Betriebsart (Setup Mode) zur inkrementellen Veränderung der Werte der Regelparameter geeignet sind. In einer anderen Betriebsart (Control Mode) dienen die Bedienungselemente zur Veränderung der Werte Regelgrößen. Die Veränderung der Werte der Regelparameter ist bei diesem bekannten Regelgerät sowohl dem Servicepersonal wie auch dem Benutzer möglich, wodurch eine Fehlbedienung nicht von vornherein ausgeschlossen ist, da die Umschaltung zwischen den Betriebsarten an der Frontplatte des Regelgerätes durch manuelle Betätigung der Taste (Setup) vorgenommen werden kann.

Bei einem anderen bekannten elektronischen Regelgerät (Gerätebeschreibung « Elektronisk regulator », Saab-Scania Nord-armaturdivisionen, 4. 1978) wird mit den Bedienungselementen ausschließlich die Stellgröße des elektronischen Regelgerätes verändert, und es werden mit der Anzeigevorrichtung die Ist- und Sollwerte des Regelgerätes angezeigt. Einrichtungen zur Einstellung der Regelparameter befinden sich seitlich hinter der Frontplatte, so daß zur notwendigen Parametrierung dieses bekannten elektronischen Regelgerätes die Frontplatte mit an ihr befestigten Reglerbausteinen aus einem Gehäuse herausgezogen werden muß. Dies bedingt flexible Zuleitungen für das elektronische Regelgerät und damit einen erhöhten gerätetechnischen Aufwand, da das Regelgerät während der Parametrierung voll funktionsfähig sein muß. Da eine Anzeige der Werte der Regelparameter an der Frontplatte bei diesem elektronischen Regelgerät nicht vorgesehen ist, kann eine optimale Parametrierung also nur in verhältnimäßig umständlicher Weise durch Beobachtung der Ist- und Sollwerte an der Anzeigevorrichtung bei gleichzeitiger Verstellung der seitlich angebrachten Einrichtung zur Einstellung der Regelparameter durchgeführt werden.

Der Erfindung liegt die Aufgabe zugrunde, ein elektronisches Regelgerät zu schaffen, das sich durch besondere Servicefreundlichkeit bei geringem gerätetechnischem Aufwand und durch eine große Sicherheit gegen Fehlbedienung auszeichnet.

Zur Lösung dieser Aufgabe ist bei einem Regelgerät der eingangs angegebenen Art erfindungsgemäß ein Umschalter an der Frontplatte vorhanden, der derart angeordnet ist, daß er durch das Öffnen der Blende betätigbar ist und im geöffneten Zustand der Blende die Bedienungselemente über den Adressierschalter mit den Einrichtungen zur Einstellung der Regelparameter sowie die Einrichtungen zur Einstellung der Regelparameter über den Adressierschalter mit der Anzeigevorrichtung verbindet und im geschlossenen Zustand der Blende die Bedienungselemente mit Vorrichtungen zur Einstellung der Stellgröße im Handbetrieb des elektronischen Regelgerätes verbindet sowie die Anzeigevorrichtung an Soll- und Istwert entsprechende Meßgröße legt. Die Schaltfunktionen dieses Umschalters können sowohl durch mechanische als auch durch elektronische Schaltelemente realisiert werden.

Vorteilhaft ist das erfindungsgemäße elektronische Regelgerät durch die Zuordnung der Bedienungselemente sowohl zu den Vorrichtungen zur Einstellung der Stellgröße oder der Führungsgröße als auch zu den Einrichtungen zur Einstellung der Regelparameter einzig mittels eines einfachen Umschalters. Da die Bedienungselemente in der Frontplatte liegen, kann die Verstellung der Einrichtungen von vorn erfolgen. Zusätzlich ist bei dem erfindungsgemäßen elektronischen Regelgerät in vorteilhafter Weise eine Anzeige der Werte der Regelparameter durch die vorhandene Anzeigevorrichtung während der Parametrierung möglich. Die Zuordnung der Bedienungselemente zu einer jeweils benötigten einzelnen Einrichtung zur Einstellung eines Regelparameters geschieht dabei mit Hilfe eines einfachen Adressierschalters. Dadurch ist eine hohe Servicefreundlichkeit gegeben. Ein Herausziehen der Frontplatte mit den an ihr befestigten Reglerbausteinen und die dadurch bedingten flexiblen Zuleitungen sind mithin nicht notwendig, was den gerätetechnischen Aufwand vermindert. Außerdem ist bei dem erfindungsgemäßen Regelgerät gewährleistet, daß bei geschlossener Blende, d. h., wenn die Blende die meisten Teile der Frontplatte des elektronischen Regelgerätes überdeckt nur eine Betriebsart nämlich die Veränderung der Werte der Regelgrößen, durchführbar ist. Ist die Blende dagegen geöffnet, d. h., die ganze Frontplatte freigegeben, so kann eine Veränderung der Werte der Regelparameter durch hierzu befugtes Servicepersonal vorgenommen werden. Die Blende des erfindungsgemäßen Regelgerätes ermöglicht eine zwangsweise Betriebsartenumschaltung.

Bei einer vorteilhaften Ausführungsform des erfindungsgemäßen elektronischen Gerätes ist eine Blende vorhanden, die lösbar am elektronischen Regelgerät vor der Frontplatte gehalten ist und Aussparungen für die Anzeigevorrichtung und für die Bedienungselemente aufweist.

Mit Hilfe dieser Blende können in einfacher Weise die Elemente des Regelgerätes, die nur zur Einstellung der Regelparameter und somit nur zum Service notwendig sind, während des normalen Regelbetriebes abgedeckt werden. Die durch eine Aussparung weiterhin beobachtbare Anzeigevorrichtung und die durch eine weitere Aussparung zugänglichen Bedienungselemente gewährleisten während des Regelbetriebes eine einfache Bedienungsmöglichkeit des elektronischen Gerätes, wobei die eventuell zu Fehlbedingungen veranlassenden Einrichtungen zur Einstellung der Regelparameter während des Regelbetriebes nicht zugänglich sind.

Weiterhin ist es vorteilhaft, den Umschalter an der Frontplatte des erfindungsgemäßen elektronischen Gerätes in einer Lage anzuordnen, in der er durch die Blende betätigbar ist. Mit dieser Anordnung wird in einfacher Weise ein unbefugtes Verändern der Regelparameter noch mehr erschwert, indem durch Aufsetzen der Blende sich der Umschalter in der weiteren Schalterstellung befindet und somit die Bedienungselemente mit Vorrichtungen zur Einstellung der Stellgröße oder der Führungsgröße des elektronischen Regelgerätes verbindet sowie die Anzeigevorrichtung an Soll- und Istwert entsprechende Meßgrößen legt. Erst bei Wegnahme der Blende von der Frontplatte befindet sich der Umschalter in der einen Schalterstellung, und es ist dem hierzu befugten Servicetechniker nun möglich, eine Parametrierung des erfindungsgemäßen elektronischen Gerätes vorzunehmen.

Die Erfindung wird anhand der Figuren erläutert, wobei

Figur 1 eine Frontseite eines Ausführungsbeispiels eines erfindungsgemäßen elektronischen Regelgerätes, und

Figur 2 ein Blockschaltbild der wesentlichen Teile dieses Ausführungsbeispiels darstellt.

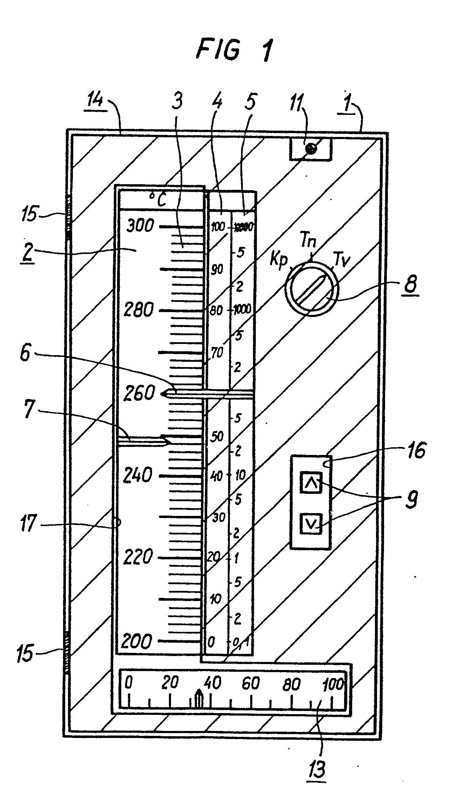

Auf einer Frontplatte 1 des elektronischen Regelgerätes befindet sich gemäß Fig. 1 eine Anzeigevorrichtung 2 mit einer Skala 3 für Soll- und Istwert entsprechenden Meßgrößen des elektronischen Regelgerätes und Skalen 4 und 5 für Regelparameter, wobei beispielsweise die Skala 4 eine lineare Teilung und die Skala 5 eine logarithmische Teilung aufweist. Ein Zeiger 6 ist dem Sollwert oder einem der Regelparameter zugeordnet ; ein weiterer Zeiger 7 ist ausschließlich dem Istwert zugeordnet.

Weiterhin sind ein Adressierschalter 8 und Bedienungselemente 9 auf der Frontplatte 1 angeordnet. Ein Umschalter 11 und eine weitere Anzeigevorrichtung 13 zur Anzeige der Stellgröße des elektronischen Regelgerätes befinden sich außerdem auf dieser Frontplatte. Eine Blende 14 ist lösbar vor der Frontplatte 1 gehalten, indem sie an Scharnieren 15 beweglich gelagert ist ; sie weist Aussparungen 16 und 17 auf und überdeckt somit bis auf die ausgesparten Teile im geschlossenen Zustand die gesamte Frontplatte 1. Die Blende 14 ist in der Figur 1 als schraffierte Fläche dargestellt.

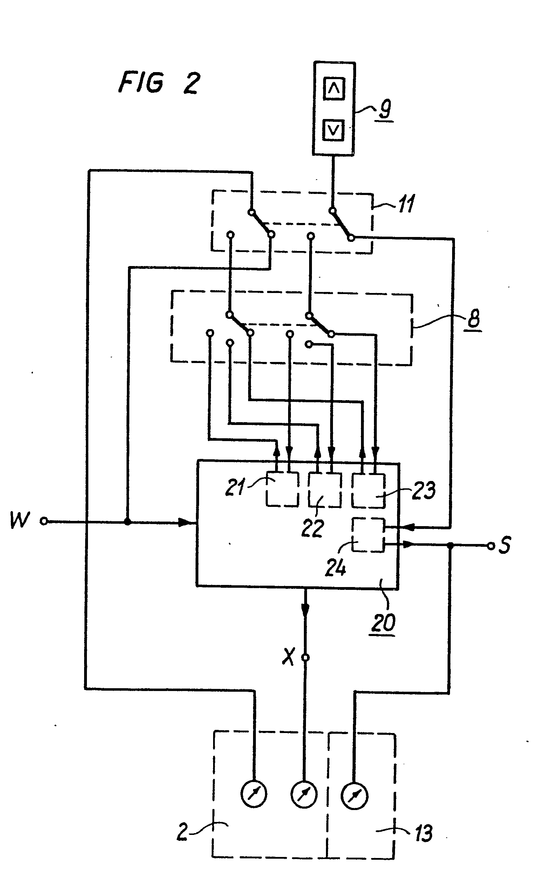

Das in der Fig. 2 dargestellte Blockschaltbild enthält einen elektronischen Regler 20, der Einrichtungen 21, 22, 23 zur Einstellung der Regelparameter sowie eine Vorrichtung 24 zur Einstellung der Stellgröße enthält. Der elektronische Regler 20 ist mit einer Führungsgröße W beaufschlagt und weist an seinen Ausgängen die Regelgröße X und die Stellgröße S auf, die mit der Anzeigevorrichtung 2 bzs. 13 angezeigt werden. Die Bedienungselemente 9 sind in der einen, nicht gezeigten Schalterstellung des Umschalters 11 über den Adressierschalter 8 mit den Einrichtungen 21, 22, 23 zur Einstellung der Regelparameter verbunden — in der dargestellten Figur ist die Einrichtung 23 mit den Bedienungselementen verbunden. Der Wert des jeweiligen über den Adressierschalter 8 eingestellten Regelparameters wird wiederum über den Adressierschalter 8 und den Umschalter 11 der Anzeigevorrichtung 2 zugeführt. In der weiteren Schalterstellung des Umschalters 11 besteht eine Verbindung der Bedienungselemente 9 mit der Vorrichtung zur Einstellung der Stellgröße.

Die Blende 14 betätigt im geschlossenen Zustand den Umschalter 11 derart, daß der Teil der Anzeigevorrichtung 2 mit dem Zeiger 7 mit der dem Istwert entsprechenden Meßgröße des elektronischen Regelgerätes beaufschlagt ist. Die Bedienungselemente 9 sind in dieser Stellung mittels des Umschalters 11 so geschaltet, daß sie bei Betätigung eine Veränderung des Wertes der Stellgröße S bewirken, die mittels der weiteren Anzeigevorrichtung 13 angezeigt wird. Im geöffneten Zustand der Blende 14 befindet sich der Umschalter 11 in einer derartigen Stellung, daß der Zeiger 6 der Anzeigevorrichtung 2 den Wert eines mittels des Adressierschalters 8 ausgewählten Regelparameters anzeigt. Außerdem sind mittels des Umschalters 11 in diesem Zustand die Bedienungselemente 9 so geschaltet, daß mit ihnen eine Veränderung des Wertes des jeweils ausgewählten Regelparameters bewirkt wird.

**Ansprüche**

1. Elektronisches Regelgerät mit

a) Bedienungselementen (9) und mit einer Anzeigevorrichtung in seiner Frontplatte (1), mit

b) Einrichtungen (21, 22, 23) zur Einstellung der Regelparameter, wobei

b1) den Einrichtungen (21, 22, 23) ein in der Frontplatte (1) liegender Adressierschalter (8) zur Einstellung der Regelparameter zugeordnet ist, sowie mit

c) einer Blende (14), die

c1) lösbar am elektronischen Regelgerät vor der Frontplatte (1) gehalten ist, dadurch gekennzeichnet, daß

d) ein Umschalter (11) an der Frontplatte (1) vorhanden ist, der

d1) derart angeordnet ist, daß er durch das Öffnen der Blende (14) betätigbar ist und

d2) im geöffneten Zustand der Blende (14)

d2.1) die Bedienungselemente (9) über den Adressierschalter (8) mit den Einrichtungen (21, 22, 23) zur Einstellung der Regelparameter sowie

d2.2) die Einrichtungen (21, 22, 23) zur Einstellung der Regelparameter über den Adressierschalter (8) mit der Anzeigevorrichtung (2) verbindet und

d3) im geschlossenen Zustand der Blende (14)

d3.1) die Bedienungselemente (9) mit Vorrichtungen (24) zur Einstellung der Stellgröße im Handbetrieb des elektronischen Regelgerätes verbindet sowie

d3.2) die Anzeigevorrichtung (2) an Soll- und Istwert entsprechende Meßgröße legt (Fig. 2).

2. Elektronisches Regelgerät nach Anspruch 1, dadurch gekennzeichnet, daß

e) die Blende (14) Aussparungen (16, 17) für die Anzeigevorrichtung (2) und für die Bedienungselemente (9) aufweist (Fig. 1).

### Claims

1. Electronic control apparatus having :

a) operating elements (9) with a display device in its front plate (1) ;

b) devices (21, 22, 23) for adjusting the control parameter, where

b1) the devices (21, 22, 23) are assigned an addressing switch (8) arranged in the front plate (1) and serving to adjust the control parameter ; and

c) a diaphragm (14), this being :

c1) detachably supported on the electronic control apparatus before the front plate (1), characterised in that

d) a change-over switch (11) is arranged on the front plate (1), this switch being :

d1) arranged in such a manner that it can be actuated by the opening action of the diaphragm (14), and such that :

d2) in the open state of the diaphragm (14)

d2.1) it connects the operating elements (9) via the addressing switch (8) to the devices (21, 22, 23) which serve to adjust the control parameters ; and

d3) in the closed position of the diaphragm (14)

d3.1) it connects the operating elements (9) to devices (24) which serve to adjust the regulating variable during manual operation of the electronic control apparatus and

d3.2) it connects the display device (2) to measuring variables corresponding to theoretical and actual values (Fig. 2).

2. Electronic control apparatus as claimed in Claim 1, characterised in that

e) the diaphragm (14) possesses recesses (16, 17) for the display device (2) and for the operating elements (9), (Fig. 1).

### Revendications

1. Ensemble de réglage électronique comportant

a) des éléments de commande (9) et un dispositif d'affichage dans on panneau frontal (1),

b) des dispositifs (21, 22, 23) pour le réglage des paramètres de réglage,

b1) un commutateur d'adressage (8) pour le réglage des paramètres de réglage, se trouvant dans le panneau frontal (1), étant associé aux dispositifs (21, 22, 23), ainsi que

c) un cache (14) qui

c1) est fixé de façon amovible sùr l'ensemble de réglage, devant le panneau frontal (1), caractérisé par le fait que

d) sur le panneau frontal (1) est prévu un inverseur (11) qui

d1) est disposé de manière à pouvoir être actionné par l'ouverture du cache (14) et

d2) dans la position ouverte du cache (14),

d2.1) relie les éléments de commande (9) aux dispositifs (21, 22, 23) pour le réglage des paramètres de réglage, par l'intermédiaire du commutateur d'adressage (8), ainsi que

d2.2) les dispositifs (21, 22, 23) pour le réglage des paramètres de réglage au dispositif d'affichage (2), par l'intermédiaire du commutateur d'adressage (8), et

d3) dans la position fermée du cache (14),

d3.1) relie les éléments de commande (9) à des dispositifs (24) pour le réglage de la grandeur réglante en fonctionnement manuel de l'ensemble de réglage électronique, et

d3.2) place le dispositif d'affichage (2) sur la grandeur de mesure correspondant à la valeur de consigne et à la valeur réelle (figure 2).

2. Ensemble de réglage électronique suivant la revendication 1, caractérisé par le fait que

e) le cache (14) comporte des évidements (16, 17) pour le dispositif d'affichage (2) et pour les éléments de commande (9) (fig. 1).

## FIG 1

FIG 2